# EUROPEAN PATENT APPLICATION

(11) **EP 4 074 680 A1**
(43) Date of publication of application: **19.10.2022**
(21) Application number: 21168884.1
(22) Date of filing: 16.04.2021
(51) Int. Cl.: C04B 41/00, C04B 41/45, C04B 41/63

(54) **SELF-ETCHING CEMENTITIOUS SUBSTRATE COATING COMPOSITION**

(71) Applicant: Sika Technology AG, 6340 Baar (CH)
(72) Inventor: DARASKEVICH, Edward, Oswego, IL Illinois 60543 (US); EARLE, Stephen, Darien, IL Illinois 60561 (US)
(74) Representative: Sika Patent Attorneys

(57) **Abstract**

Described is a method for producing a coating with an aqueous coating composition **AC,** the method comprising the following steps: a) applying the aqueous coating composition **AC** to a cementitious substrate; b) curing the applied aqueous coating composition **AC;** wherein the aqueous coating composition **AC** comprises at least one amino-functional vinyl copolymer **VC** and at least one epoxy silane **ES** and the coating composition has a pH of 3 - 6.5 and the weight ratio between amino-functional vinyl copolymer **VC** and epoxy silane **ES (VC/ES)** is from 1.0 - 9.5. Since the composition displays self-etching properties on concrete surfaces, cementitious substrates do not have to be mechanically or chemically pretreated before the composition is applied.

## Description

### Technical field

The invention relates to coatings for cementitious substrates, especially coatings for decorative concrete staining and sealing.

### Prior art

Cementitious substrates like patios, sidewalks, floor tiles and garage floors require hard, abrasion resistant coatings with excellent adhesion.

When applying a decorative coating, it is usually required to mechanically grind or acid etch the cementitious substrate to open up the surface and generate porosity to chemically and mechanically enhance adhesion of the coating on the concrete.

A current methodology for decorative concrete staining is to acid etch the concrete with hydrochloric acid, neutralize with ammonia, wash with water, let dry, and then apply the stain onto the concrete. For example, US2009/208643 A1 discloses a method for concrete etching and cleaning which includes urea hydrochloride, surfactant, water, and one or more glycol ethers.

The disadvantage in the current methodology lies in the burdensome and time-consuming multistep procedure that requires safety procedures for handling the hydrochloric acid and the ammonia. There is a need for a faster and safer procedure.

### Summary of the invention

The object of the invention, accordingly, was that of overcoming the above-discussed problems of the prior art, especially to provide a method for applying a decorative concrete coating that overcomes the requirement to mechanically grind or acid etch the concrete substrate. This would provide a faster and safer method that entails less cost and usage of material.

Surprisingly it would be possible to achieve this object through the method as claimed in the first main claim including a coating system as described hereinafter.

Preferred embodiments of the composition are reproduced in the dependent claims. The invention is elucidated below comprehensively.

### A way of performing the invention

The invention relates to a method for producing a coating with an aqueous coating composition **AC,** the method comprising the following steps:
a) applying the aqueous coating composition **AC** to a cementitious substrate;
b) curing the applied aqueous coating composition **AC.**
The aqueous coating composition **AC** comprises:
- at least one amino-functional vinyl copolymer **VC,** and
- at least one epoxy silane **ES.**

The coating composition has a pH of 3 - 6.5 and the weight ratio between amino-functional vinyl copolymer **VC** and epoxy silane **ES (VC/ES)** is from 1.0 - 9.5.
The cementitious substrate is not mechanically or chemically pretreated, preferably not chemically pretreated, at least 1 day, preferably 1 week, more preferably 1 month, before step a).

A "primary hydroxyl group" refers to an OH group which is bonded to a carbon atom with two hydrogens.
A "primary amino group" refers to an NH₂ group which is bonded to an organic radical, and a "secondary amino group" refers to an NH group which is bonded to two organic radicals which may also together be part of a ring.
"Molecular weight" in the present document is understood as the molar mass (in grams per mole) of a molecule. "Average molecular weight" refers to the number average Mₙ of an oligomeric or polymeric mixture of molecules, which is typically determined using gel permeation chromatography (GPC) against polystyrene as standard.
"Room temperature" refers to a temperature of around 23°C.
The expression "independently of one another" here always means independently of one another in the same molecule if there are various possibilities.

In the present document, the terms "silane" and "organosilane" identify compounds which firstly have at least one, customarily two or three, hydrolysable groups, preferably alkoxy groups or acyloxy groups bonded directly to the silicon atom, preferably via Si-O bonds, and secondly have at least one organic radical bonded directly to the silicon atom via an Si-C bond. Silanes of these kinds having alkoxy or acyloxy groups are also known by the person skilled in the art as organoalkoxysilanes and organoacyloxysilanes, respectively.

A property of such silanes is that of undergoing at least partial hydrolysis on contact with moisture. This hydrolysis produces organosilanols, these being organosilicon compounds containing one or more silanol groups (Si-OH groups), and subsequent condensation reactions produce organosiloxanes, these being organosilicon compounds containing one or more siloxane groups (Si-O-Si groups).
"Aminosilanes" is a term used for organosilanes whose organic radical has an amino group. "Primary aminosilanes" are aminosilanes which have a primary amino group, i.e., an NH₂ group bonded to an organic radical. "Secondary amino silanes" are aminosilanes which have a secondary amino group, i.e., an NH group bonded to two organic radicals.

The aqueous coating composition **AC** comprises at least one amino-functional vinyl copolymer **VC.**

Preferably, the amino-functional vinyl copolymers **VC** are polymers from at least two different kinds of ethylenically unsaturated monomers, at least one of which is an ethylenically unsaturated monomer **M1** which does not have amino groups, and at least one of which has at least one tertiary amino group per molecule **M2** and/or at least one of which has at least one secondary amino group per molecule **M3.**

The amino-functional vinyl polymers **VC** preferably have at least two amino groups per molecule.

Preferably, the ethylenically unsaturated monomer **M1** are selected from the group consisting of:
- acidic vinyl monomers **M1-1** having at least one acid group, preferably a carboxylic or sulphonic acid group, and an alkene group having from 2 to 10 carbon atoms, preferably monocarboxylic acids and dicarboxylic acids and their C1- to C25-alkyl half esters, preferred monomers **M1-1** being acrylic and methacrylic acid, vinyl acetic acid, and crotonic and isocrotonic acids, maleic and fumaric acids, monoalkyl esters of olefinically unsaturated dicarboxylic acids such as monomethyl and monoethyl maleinate or the corresponding fumarates, itaconates, mesaconates, and citraconates;
- alkyl esters **M1-2** of olefinically unsaturated carboxylic acids, which are esters of an aliphatic linear, branched or cyclic monohydric alcohol having up to 25 carbon atoms per molecule, wherein methylene groups may be replaced by an oxygen atom, with the proviso that two oxygen atoms may not be directly bound to each other, and an olefinically unsaturated carboxylic acid having from 3 to 20 carbon atoms, preferably alkyl (meth)acrylates which are esters of (meth)acrylic acid with the said alcohols;
- hydroxyalkyl esters **M1-3** of olefinically unsaturated carboxylic acids which are esters of olefinically unsaturated carboxylic acids having from 4 to 20 carbon atoms and an aliphatic linear, branched or cyclic dihydric or polyhydric alcohol having up to 25 carbon atoms per molecule, wherein methylene groups may be replaced by an oxygen atom, with the proviso that two oxygen atoms may not be directly bound to each other, preferably hydroxyalkyl (meth)acrylates which are esters of (meth)acrylic acid with the said dihydric or polyhydric alcohols;

- vinyl ethers **M1-4** of olefinically unsaturated alcohols, preferably vinyl and allyl and methallyl alcohols, and the monohydric alcohols mentioned under **M1-2;**
- vinyl halogenides **M1-5** which may preferably be chloro- and bromo-substituted alkenes having from 2 to 20 carbon atoms, preferably vinyl chloride, vinyl bromide, allyl chloride and bromide, and methallyl chloride and bromide, and vinylidene chloride and bromide;
- vinyl nitriles **M1-6,** preferably acrylonitrile, methacrylonitrile, fumaric and maleic dinitriles;
- vinyl esters **M1-7** which are esters of vinyl alcohol and linear, branched or cyclic aliphatic monocarboxylic acids having up to 25 carbon atoms, preferably the acetate, propionate, isooctanoate, and neodecanaote (2,2-dimethyloctanoate);
- vinyl ketones **M1-8** having a total of from 4 to 20 carbon atoms such as methyl, ethyl, butyl, and decyl vinyl ketone;
- vinyl aromatics **M1-9** such as styrene, vinyl naphthalene, and vinyl toluene where that latter two may be chosen from individual compounds such as 2- and 4-vinyl toluene, and 1- and 2-vinyl naphthalene, or the mixtures of the said isomers.

More preferably, the ethylenically unsaturated monomer **M1** are selected from the group consisting of:
- vinyl aromatics **M1-9,** especially styrene, vinyl toluene, vinyl naphthalene, more preferably styrene, 2-vinly styrene, 4-vinyl toluene, 1-vinyl naphthalene or 2-vinyl naphthalene;
- acidic vinyl monomers **M1-1,** especially acrylic acid, methacrylic acid, vinyl acetic acid, crotonic acid, isocrotonic acid, monomethyl maleinate and monoethyl maleinate.

Most preferably the ethylenically unsaturated monomer **M1** is selected from the group consisting of butylacrylate, methyl methacrylate and 4-hydroxybutyl acrylate.

Preferably, the ethylenically unsaturated monomer **M2** which has at least one tertiary amino group per molecule is a dialkylamino-alkyl (meth)acrylate, especially selected from the list consisting of diethylaminoethyl (meth)acrylate and dimethylaminoethyl (meth)acrylate, most preferred is dimethylaminoethyl methacrylate.

Preferably, the ethylenically unsaturated monomer **M3** which has at least one secondary amino group per molecule is tert.-butylaminoethyl (meth)acrylate.

Preferably, the amount of the amino-functional vinyl copolymers **VC** is 10 - 30 wt.-%, preferably 12.5 - 25 wt.-%, preferably 15 - 22.5 wt.-%, most preferably 17 - 20 wt.-%, based on the total weight of the aqueous coating composition **AC.**

The composition contains at least one epoxy silane **ES.**

The at least one epoxy silane **ES** is preferably of the formula (I) 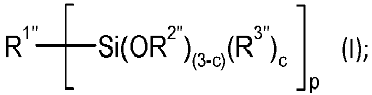 or they consist of at least one reaction product of this type.

R¹ here is an n-valent organic radical with at least one primary and/or secondary amino group. R^{1"} is a p-valent organic radical with at least one epoxy group. In addition, R² and R^{2"} are each independently an alkyl group having 1 to 4 carbon atoms, and R³ and R^{3"} are each independently H or an alkyl group having 1 to 10 carbon atoms. Finally, a and c are each independently 0, 1 or 2 and p can be 1, 2, 3 and 4.
The epoxy silane may thus have one or more silane groups.
In a preferred embodiment, a is 0 and R² is methyl or ethyl. Additionally, preferably, c is 0 and R²" is methyl or ethyl.

More preferably, a and c are each 0, and R² and R²" are each methyl or ethyl, especially methyl. The index p is preferably 1.

The epoxy silane of the formula (I) is preferably an epoxy silane of the formula (II) or (III): 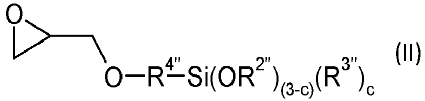 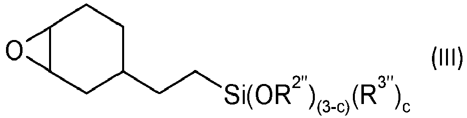 where R^{4"} is a linear or branched alkylene group having 1 to 6 carbon atoms, especially propylene.
Particularly suitable epoxy silanes have been found to be those of the formula (II) or (III) in which R^{4"} is propylene, c is 0 and R²" is methyl or ethyl. The most preferred epoxy silanes are considered to be 2-(3,4-epoxycyclohexyl)ethyltrimethoxysilane, 2-(3,4-epoxycyclohexyl)ethyltriethoxysilane, 3-glycidyloxypropyltriethoxysilane and 3-glycidyloxypropyltrimethoxysilane.
The epoxy silane preferably bears a glycidyloxy group. Preferred epoxy silanes are considered to be 3-glycidyloxypropyltriethoxysilane and 3-glycidyloxypropyltrimethoxysilane. The most preferred epoxy silane is 3-glycidyloxy-propyltrimethoxysilane.

Preferably, the amount of the at least one epoxy silane **ES** is 2.0 - 15 wt.-%, preferably 2.5 - 12.5 wt.-%, preferably 2.75 - 12.5 wt.-%, preferably 3 - 10 wt.-%, preferably 3.25 - 7.5 wt.-%, preferably 3.25 - 5 wt.-%, preferably 3.5 - 4.5 wt.-%, most preferably 3.5 - 4 wt.-%, based on the total weight of the aqueous coating composition **AC.**

It was further surprising, that compositions containing aminosilanes or alkylsilanes instead of epoxy silanes, did not provide the necessary properties, as seen for example in table 3. The composition containing aminosilanes was incompatible with the aqueous coating composition and precipitated when mixed. The composition containing alkylsilanes did not provide sufficient acetone rub resistance.

If the aqueous coating composition **AC** contains aminosilanes and/or alkylsilanes, the amount of aminosilanes and/or alkylsilanes is preferably less than 3% by weight, less than 2% by weight, less than 1% by weight, less than 0.5% by weight, less than 0.1% by weight, most preferably less than 0.01% by weight, based on the total weight of the aqueous coating composition **AC.**

The coating composition has a pH of 3 - 6.5.
Surprisingly it was found that a pH of lower than 3 inhibits the cure of the coating composition. This can be seen in table 4 in the comparison of E16 with Ref13. Further, a pH higher than 6.5 was found to decrease the adhesion of the coating composition on the substrate. This can be seen in table 5 in the comparison of E17 with Ref14.

Preferably, the coating composition has a pH of 3.5 - 6.0, preferably 4.0 - 5.5, more preferably 4.5 - 5.25, most preferably 4.75 - 5.25. This is advantageous with respect to curing rates in combination to good adhesion after repetitious freeze/thaw cycles.

The weight ratio between amino-functional vinyl copolymer **VC** and epoxy silane **ES (VC/ES)** is from 1.0 - 9.5,

Surprisingly it was found that a ratio of higher than 9.5 decreases the acetone rub resistance of the cured coating composition. This can be seen in table 3 in the comparison of Ref6 with E12-E15. Further, a ratio lower than 1.0 has the disadvantage of a very fast cure time.

Preferably, weight ratio between amino-functional vinyl copolymer **VC** and epoxy silane **ES (VC/ES)** is 2 - 8, preferably 3 - 7, preferably 3.5 - 6.5, preferably 4 - 6, preferably 4.25 - 5.5, most preferably 4.5 - 5.25. This has the advantage of good adhesion after repetitious freeze/thaw cycles in combination with good acetone rub resistance.

The aqueous coating composition **AC** contains water. Preferably, the amount of water is 40 - 65 wt.-%, preferably 45 - 60 wt.-%, more preferably 50 - 55 wt.-%, based on the total weight of the aqueous coating composition **AC.**

Preferably, the aqueous coating composition **AC** further contains fillers.
Preferred fillers are selected from the group consisting of ground or precipitated calcium carbonates, barytes, quartz flours, quartz sands, dolomites, wollastonites, kaolins, calcined kaolins, aluminum hydroxides, magnesium hydroxides, silicas, preferably silicas.

Preferably, the amount of filler is 5 - 20 wt.-%, preferably 10 - 15 wt.-%, based on the total weight of the aqueous coating composition **AC.** This is advantageous with respect to scratch resistance or the cured composition.

Preferably, the aqueous coating composition **AC** further contains pigments. Preferred pigments are selected from the group consisting of inorganic or organic pigments, preferably inorganic pigments, in particular titanium dioxide, chromium oxides and iron oxides.

Preferably, the amount of pigments is 0.1 - 25 wt.-%, preferably 1 - 22.5 wt.-%, preferably 5 - 20 wt.-%, preferably 7.5 - 17.5 wt.-%, most preferably 10 - 15 wt.-%, based on the total weight of the aqueous coating composition **AC.**

However, in case a transparent coating is desired, it can also be preferred if amount of pigments is less than 1 wt.-%, preferably less than 0.5 wt.-%, preferably less than 0.1 wt.-%, preferably less than 0.01 wt.-%, most preferably 0 wt.-%, based on the total weight of the aqueous coating composition **AC.**

Preferably, the aqueous coating composition **AC** further contains additives. Preferred additives are selected from the group consisting of wetting agents, leveling agents, defoamers and stabilizers against oxidation, heat, light or UV radiation.

Preferably, the amount of additives is 0.1 - 2 wt.-%, preferably 0.25 - 1.5 wt.-%, based on the total weight of the aqueous coating composition **AC.**

Preferably, the aqueous coating composition **AC** is a two-component composition, wherein the first component **A** contains the at least one amino-functional vinyl copolymer **VC** and the second component **B** contains the at least one epoxy silane **ES.**

The curing reaction commences with the mixing of the first component **A** with the second component **B.** The reaction leads to an increase in viscosity and eventually to the curing of the aqueous coating composition **AC,** thereby ultimately curing the composition.

The method for producing a coating with the aqueous coating composition **AC** comprises the step a) of applying the aqueous coating composition **AC** to a cementitious substrate.

The term "cementitious" preferably refers to a substrate or material that comprises cement and preferably has the properties or characteristics of cement.

Preferably, cementitious substrates contain, preferably consist of, a material selected from the list of cement and concrete. Preferred cementitious substrates are selected from the list consisting of floors, preferably sidewalks, patios, garage floors and balcony floors, tiles, decks, boards and panels, preferably floors, more preferably patios and sidewalks. Preferably, the cementitious substrates does not contains a primer layer, preferably an epoxy primer composition.

Preferably, the step a) takes place at temperatures in the range from 5 to 40°C and takes 1 - 60 min, especially 5-20 min.

Preferably, the aqueous coating composition **AC** is applied as one layer.

The cementitious substrate is not mechanically or chemically pretreated, preferably not chemically pretreated, at least 1 day, preferably 1 week, more preferably 1 month, before step a).

Surprisingly it was found that if the substrate is mechanically or chemically pretreated, preferably chemically pretreated, at least 1 day before step a), the adhesion of the coating composition on the substrate is insufficient. This can be seen in table 5 in the comparison of E17 applied on an etched substrate compared to E17 applied a non-treated substrate.

Preferably, mechanically pretreated refers to grinding, brushing, sandblasting and/or sanding, preferably removing 1 - 20 mil of the thickness of the mechanically pretreated surface of the cementitious substrate.

Preferably, chemically pretreated refers to application of a primer composition, preferably an epoxy primer composition; etching, preferably etching with an acid of a pH lower than pH 3, especially hydrogen chloride; and/or cleaning, preferably with liquid detergents and/or organic solvents, the surface of the cementitious substrate.

Most preferably, chemically pretreated refers to etching, preferably etching with an acid of a pH lower than pH 3, preferably less than pH 1, especially hydrogen chloride.

It is further preferred, if mechanically or chemically pretreated refers to a pretreatment performed to more than 50 %, preferably more than 80 %, more preferably more than 90 %, of the surface of the cementitious substrate the aqueous coating composition **AC** composition is applied to in step a).

It is further preferred, if mechanically or chemically pretreated does not refer to weathering the cementitious substrate.

Preferably, the application of the aqueous coating composition **AC** to the cementitious substrate is performed by rolling, brushing or spraying, preferably rolling or brushing.

Application takes place preferably within the open time of the coating composition. In case the aqueous coating composition is a two component composition, the "open time" or else "pot life" here refers to the time elapsing between the mixing of the components **A** and **B** and the end of a state of the composition in which it is suitable for working.

The method for producing a coating with the aqueous coating composition **AC** comprises the step b) of curing the applied aqueous coating composition **AC.**

Preferably, in the step b), curing for the composition to be dry to the touch takes place at temperatures in the range from 5 to 40°C and takes 30-300 min, especially 60-120 min.

In order to be sufficient cured to walk on, the composition preferably takes 2 - 6 hours at 23 °C, preferably 1 - 7 days to reach it final cure.

Preferably, the cured coating composition **AC** after step b), has a layer thickness in the range from 0.1 to 4 mil, especially 0.5 to 3 mil, more preferably 0.75 to 2 mil.

Preferably no topcoat/sealing layer is applied to the cured coating composition. A "seal" in this context refers to a transparent or pigmented, high-grade coating which is applied as the uppermost, thin layer to a coating. It protects and enhances the surface of the coating. A typical layer thickness in this case, in the dry state, is in the range from 1.2 to 40 mil, especially 1.2 to 12 mil, more preferably 4 to 8 mil (around 150 g/m²).

### Examples

Given below are working examples which are intended to further elucidate the invention described. Of course, the invention is not confined to these working examples described.

### Commercial substances used:

- Epoxysilane: 3-Glycidyloxypropyltrimethoxysilane, Mw: 236.1 g/mol, epoxy silane, DOWSIL^{™} Z*-6040 Silane,* DOW, USA
- Aminosilane: Aminoethylaminopropyltrimethoxysilane, aminosilane, XIAMETER^{®} OFS-6020 Silane, DOW, USA
- Alkylsilane 1: Triethoxy(methyl)silane, alkylsilane, XIAMETER^{®} OFS-6370 Silane, DOW, USA
- Alkylsilane 2: n-Octyltriethoxysilane, alkylsilane, XIAMETER^{®} OFS-6341 Silane, DOW, USA
- VC-1: Ottopol KX-99, 29.0 -31.0 % solid content, cationic acrylic polymer solution with hydroxyl functionality, Gellner Industrial USA
- VC-2: Viacryl SC6841W/50WA, 50 % solid content, cationic acrylic polymer solution, Allnex USA
- Copolymer 1: Ucecryl B 3033, waterbased acrylic resin, 46 % solid content, Allnex USA
- Filler: Levasil cc401, neutral, aqueous dispersion of colloidal silica that is approximately 37% solids by weight, Nouryon
- Surfectant: Thetawet FS-8100, nonionic fluorinated surfactant, Innovative Chemical Technologies, USA
- Defoamer 1: Byk 024, silicone-based defoamer, Byk
- Defoamer 2: Byk 028, silicone-based defoamer, Byk
- Pigment: Bayferrox Red 110, synthetic iron oxide pigment in powder form, Lanxess

Production and application of the aqueous coating composition, and methods of testing:
In order to prepare the component A of the component aqueous coating composition, the relevant raw materials were put together and mixed for 10 min using a mixing blade.

The **acetone rub resistance** (resistance to solvents) was measured at 23 °C after coating a concrete surface with the composition and allowing it to cure. Once curing was complete, the film (thickness 1-2 mil) was scrubbed with acetone. Acetone was applied to a lab wipe and the resin film was scrubbed in about 1-inch diameter circles. Acetone was reapplied every 50 circles. The number of circles is indicated in tables 1 - 5.

The **hardness** was measured at 23 °C by scratching the surface with a fingernail.
If the surface showed scratches this was considered "soft".
If the surface did not show scratches this was considered "hard".

The **freeze/thaw cycles** were measured by preparing samples by application of the coating composition (thickness after cure 1-2 mil) on clean cement blocks (7 inch by 7 inch) and letting the composition cure for 1 week at 23 °C.
These samples were then placed in a freeze/thaw cycle chamber that holds a sample at - 26 °C for one hour, ramps to 23 °C in 15 minutes. The sample is then held for one hour at 23 °C and drops to - 26 °C within 15 minutes. This procedure is continuously repeated and run for ten consecutive days.
If the coating displayed unchanged appearance and properties this was considered "good".
If the coating turned white and became soft (removable by robbing with finger) or delaminated this was considered "bad".

The **adhesion** was measured at 23°C according to the crosshatch
tape off method according to ASTM D3359, the rating of 0B being the lowest value and 5B being the highest/best value. The samples were prepared by application of the coating composition (thickness after cure 1-2 mil) on clean cement blocks (7 inch by 7 inch) and letting the composition cure for 1 week at 23 °C.
The samples applied on cement blocks that were chemically pretreated before the application (etching with hydrogen chloride, neutralizing, washing and drying) of the coating compositions are labelled "Etching substrate/yes", untreated cement blocks are labelled "Etching substrate/no".

**Table 1**

| | **E1** | **Ref1** | **Ref2** | **Ref3** |
|---|---|---|---|---|
| **Component A** | | | | |
| VC-2 | 44.86 | 44.86 | | |
| Copolymer 1 | | | 63.86 | 63.86 |
| Colloidal silica | 15.2 | 15.2 | 20.61 | 20.61 |
| Water | 34.2 | 38.5 | 9.27 | 13.57 |
| Surfectant | 0.4 | 0.4 | 0.54 | 0.54 |
| Defoamer 1 | 0.52 | 0.52 | 0.71 | 0.71 |
| Defoamer 2 | 0.52 | 0.52 | 0.71 | 0.71 |

| **Component B** | | | | |
|---|---|---|---|---|
| Epoxysilane | 4.3 | 0 | 4.3 | 0 |
| **Total amount A+B** | 100 | 100 | 100 | 100 |
| **Ratio (VC/ES)** | 5.2 | - | 6.8 | - |
| | | | | |
| Acetone rub resistance | >20 | <20 | <20 | <20 |
| Hardness | hard | hard | soft | soft |

**Table 2**

| | **Ref4** | **E2** | **E3** | **E4** | **E5** | **E6** | **Ref5** | **E7** | **E8** | **E9** | **E10** | **E11** |
|---|---|---|---|---|---|---|---|---|---|---|---|---|
| **Component A** | | | | | | | | | | | | |
| VC-1 | 57.8 | 57.5 | 57.0 | 54.8 | 53.7 | 52.6 | 72.2 | 71.6 | 71.0 | 68.7 | 67.3 | 66.0 |
| Colloidal silica | 12.5 | 12.4 | 12.3 | 11.9 | 11.6 | 11.4 | 14.7 | 14.5 | 14.4 | 14.0 | 13.7 | 13.4 |
| Water | 12.5 | 12.4 | 12.3 | 11.9 | 11.6 | 11.4 | 8.2 | 8.2 | 8.1 | 7.7 | 7.6 | 7.7 |
| Surfectant | 0.0 | 0.0 | 0.0 | 0.0 | 0.0 | 0.0 | 0.4 | 0.4 | 0.4 | 0.4 | 0.4 | 0.4 |
| Defoamer 1 | 0.6 | 0.6 | 0.6 | 0.5 | 0.5 | 0.5 | 0.5 | 0.5 | 0.5 | 0.5 | 0.5 | 0.4 |
| Defoamer 2 | 0.6 | 0.6 | 0.6 | 0.5 | 0.5 | 0.5 | 0.5 | 0.5 | 0.5 | 0.5 | 0.5 | 0.4 |
| Pigment | 13.0 | 12.9 | 12.8 | 12.3 | 12.2 | 11.9 | 0.0 | 0.0 | 0.0 | 0.0 | 0.0 | 0.0 |
| | | | | | | | | | | | | |

| **Component B** | | | | | | | | | | | | |
|---|---|---|---|---|---|---|---|---|---|---|---|---|
| Epoxysilane | 3.0 | 3.6 | 4.4 | 8.1 | 9.9 | 11.7 | 3.5 | 4.3 | 5.1 | 8.2 | 10.0 | 11.7 |
| **Total amount A+B** | 100 | 100 | 100 | 100 | 100 | 100 | 100 | 100 | 100 | 100 | 100 | 100 |
| **Ratio (VC/ES)** | 5.8 | 4.7 | 3.9 | 2.0 | 1.6 | 1.3 | 6.2 | 5.0 | 4.2 | 2.5 | 2.0 | 1.7 |
| **Freeze/thaw cycles** | bad | qood | qood | good | qood | qood | bad | qood | qood | qood | qood | qood |

**Table 3, *=incompatible with component A and precipitated when mixed, **=some breakage in cured film, ***=completely dissolved film.**

| | **E12** | **E13** | **E14** | **E15** | **Ref6** | **Ref7** | **Ref8** | **Ref9** | **Ref10** | **Ref11** | **Ref12** |
|---|---|---|---|---|---|---|---|---|---|---|---|
| **Component A** | | | | | | | | | | | |
| VC-1 | 58 | 58 | 58 | 58 | 58 | 58 | 58 | 58 | 58 | 58 | 58 |
| Colloidal silica | 12.6 | 12.6 | 12.6 | 12.6 | 12.6 | 12.6 | 12.6 | 12.6 | 12.6 | 12.6 | 12.6 |
| Water | 12.6 | 12.6 | 12.6 | 12.6 | 12.6 | 12.6 | 12.6 | 12.6 | 12.6 | 12.6 | 12.6 |
| Defoamer 1 | 0.6 | 0.6 | 0.6 | 0.6 | 0.6 | 0.6 | 0.6 | 0.6 | 0.6 | 0.6 | 0.6 |
| Defoamer 2 | 0.6 | 0.6 | 0.6 | 0.6 | 0.6 | 0.6 | 0.6 | 0.6 | 0.6 | 0.6 | 0.6 |
| Pigment | 13 | 13 | 13 | 13 | 13 | 13 | 13 | 13 | 13 | 13 | 13 |

| **Component B** | | | | | | | | | | | |
|---|---|---|---|---|---|---|---|---|---|---|---|
| Epoxysilane | 3.5 | 4.2 | 2.8 | 2.1 | 1.75 | | | | | | |
| Aminosilane | | | | | | 3.5 | | | | | |
| Alkylsilane 1 | | | | | | | 3.5 | 4.2 | 2.8 | | |
| Alkylsilane 2 | | | | | | | | | | 3.5 | 4.2 |
| **Total amount A+B** | 101.7 | 102.6 | 100.8 | 100 | 99.6 | 101.7 | 101.7 | 102.6 | 100.8 | 101.7 | 102.6 |
| **Ratio (VC/ES)** | 5.0 | 4.1 | 6.2 | 8.3 | 9.9 | 5.0 | 5.0 | 4.1 | 6.2 | 5.0 | 4.1 |
| acetone rub resistance | >500 | >500 | >500 | >500 | 500** | n.d. * | <20*** | <20*** | <20*** | <20*** | <20*** |

**Table 4**

| | **E16** | **Ref13** |
|---|---|---|
| **Component A** | | |
| VC-1 | 58 | 58 |
| Colloidal silica | 12.6 | 12.6 |
| Water | 11.7 | 11.7 |
| Defoamer 1 | 0.6 | 0.6 |
| Defoamer 2 | 0.6 | 0.6 |
| Pigment | 13 | 13 |

| **Component B** | | |
|---|---|---|
| Epoxysilane | 3.5 | 3.5 |
| Citric acid | 0 | 5 |
| **Total amount A+B** | 100 | 105 |
| | | |
| pH mixed composition | 5.10 | 2.64 |
| Curing | yes | no |

**Table 5**

| | **E17** | **Ref14** | **E17** |
|---|---|---|---|
| Etching substrate | no | no | yes |

| **Component A** | | | |
|---|---|---|---|
| VC-1 | 58 | 58 | 58 |
| Colloidal silica | 12.6 | 12.6 | 12.6 |
| Water | 11.7 | 11.7 | 11.7 |
| Defoamer 1 | 0.6 | 0.6 | 0.6 |
| Defoamer 2 | 0.6 | 0.6 | 0.6 |
| Pigment | 13 | 13 | 13 |

| **Component B** | | | |
|---|---|---|---|
| Epoxysilane | 3.5 | 3.5 | 3.5 |
| **Total amount A+B** | 100 | 100 | 100 |
| | | | |
| pH mixed composition | 5.10 | 7.00 | 5.10 |
| Adhesion ASTM D3359 crosshatch tape off method ASTM D3359 | 5B | OB-1B | 3B |

## Claims

1. A method for producing a coating with an aqueous coating composition **AC,** the method comprising the following steps:
a) applying the aqueous coating composition **AC** to a cementitious substrate;
b) curing the applied aqueous coating composition **AC;**
wherein the aqueous coating composition **AC** comprises:
- at least one amino-functional vinyl copolymer **VC;**
- at least one epoxy silane **ES;**
wherein the coating composition has a pH of 3 - 6.5;
wherein the weight ratio between amino-functional vinyl copolymer **VC** and epoxy silane **ES (VC/ES)** is from 1.0 - 9.5; and
wherein the cementitious substrate is not mechanically or chemically pretreated, preferably not chemically pretreated, at least 1 day, preferably 1 week, more preferably 1 month, before step a).

2. The method according to claim 1, wherein the weight ratio between amino-functional vinyl copolymer **VC** and epoxy silane **ES (VC/ES)** is 2 - 8, preferably 3 - 7, preferably 3.5 - 6.5, preferably 4 - 6, preferably 4.25 - 5.5, most preferably 4.5 - 5.25.

3. The method according to any preceding claims, wherein the coating composition has a pH of 3.5 - 6.0, preferably 4.0 - 5.5, more preferably 4.5 - 5.25, most preferably 4.75 - 5.25.

4. The method according to any preceding claims, wherein the amino-functional vinyl copolymers **VC** are polymers from at least two different kinds of ethylenically unsaturated monomers, at least one of which is an ethylenically unsaturated monomer **M1** which does not have amino groups, and at least one of which has at least one tertiary amino group per molecule **M2** and/or at least one of which has at least one secondary amino group per molecule **M3.**

5. The method according to any preceding claims, wherein the amount of the amino-functional vinyl copolymers **VC** is 10 - 30 wt.-%, preferably 12.5 - 25 wt.-%, preferably 15 - 22.5 wt.-%, most preferably 17 - 20 wt.-%, based on the total weight of the aqueous coating composition **AC.**

6. The method according to any preceding claims, wherein the amount of the at least one epoxy silane **ES** is 2.0 - 15 wt.-%, preferably 2.5 - 12.5 wt.-%, preferably 2.75 - 12.5 wt.-%, preferably 3 - 10 wt.-%, preferably 3.25 - 7.5 wt.-%, preferably 3.25 - 5 wt.-%, preferably 3.5 - 4.5 wt.-%, most preferably 3.5 - 4 wt.-%, based on the total weight of the aqueous coating composition **AC.**

7. The method according to any preceding claims, wherein the aqueous coating composition **AC** further contains fillers, preferably in an amount of 5 - 20 wt.-%, preferably 10 - 15 wt.-%, based on the total weight of the aqueous coating composition **AC,** preferably silicas.

8. The method according to any preceding claims, wherein the aqueous coating composition **AC** further contains pigments, preferably in an amount of 0.1 - 25 wt.-%, preferably 1 - 22.5 wt.-%, preferably 5 - 20 wt.-%, preferably 7.5 - 17.5 wt.-%, most preferably 10 - 15 wt.-%, based on the total weight of the aqueous coating composition **AC,** preferably inorganic pigments, in particular titanium dioxide, chromium oxides and iron oxides.

9. The method according to any preceding claims, wherein the aqueous coating composition **AC** is a two-component composition, wherein the first component **A** contains the at least one amino-functional vinyl copolymer **VC** and the second component **B** contains the at least one epoxy silane **ES.**

10. The method according to any preceding claims, wherein chemically pretreated refers to etching, preferably etching with an acid of a pH lower than pH 3, preferably less than pH 1, especially hydrogen chloride.

11. The method according to any preceding claims, wherein the cementitious substrate is selected from the list consisting of floors, preferably sidewalks, patios, garage floors and balcony floors, tiles, decks, boards and panels, preferably floors, more preferably patios and sidewalks.

12. The method according to any preceding claims, wherein mechanically or chemically pretreated refers to a pretreatment performed to more than 50 %, preferably more than 80 %, more preferably more than 90 %, of the surface of the cementitious substrate the aqueous coating composition **AC** composition is applied to in step a).

13. The method according to any preceding claims, wherein in the step b), curing for the composition to be dry to the touch takes place at temperatures in the range from 5 to 40°C and takes 30-300 min, especially 60-120 min.

14. The method according to any preceding claims, wherein the cured coating composition **AC** after step b) has a layer thickness in the range from 0.1 to 4 mil, especially 0.5 to 3 mil, more preferably 0.75 to 2 mil.
